# EUROPEAN PATENT APPLICATION

(11) **EP 4 703 684 A1**
(43) Date of publication of application: **04.03.2026**
(21) Application number: 24197498.9
(22) Date of filing: 30.08.2024
(51) Int. Cl.: G01C 21/20, G01C 21/34, G01S 19/39, G06N 20/00

(54) **VEHICLE NAVIGATION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer-implemented method of navigating a vehicle on a journey from a start location to an end location is provided. The method receives a plurality of measurements of a property of a positioning signal within a geographical region to be traversed by the vehicle during the journey. The method generates one or more predictions of the property of the positioning signal within the geographical region based on at least some of the plurality of measurements. Each prediction indicates a predicted value of the property of the positioning signal at a respective location within the geographical region at a time that the journey is to take place. The method determines, based on the one or more predictions, at least one location within the geographical region at which the positioning signal is predicted to be lost during the journey. The method prevents a loss of the positioning signal by causing the vehicle to avoid the at least one location.

## Description

### Field of the Invention

The present invention relates to navigation of vehicles. In particular, it relates to preventing the loss of a positioning signal for a vehicle such as an autonomous vehicle.

### Background to the Invention

The ability to navigate is crucial to undertaking a journey in a vehicle. There are various navigational systems available which utilise an external positioning signal to determine a current location (or position) of a vehicle. This process may be referred to as geolocation. For example, such navigational systems may use the positioning signals generated by satellites that are part of a Global Navigation Satellite System (GNSS), such as the Global Positioning System (GPS) or the Galileo GNSS. However, other types of positioning signals are also available, such as ground-based radio navigation systems like LORAN. If the positioning signal is lost, that is to say if the positioning signal becomes unavailable or sufficiently degraded as to be unusable, then a navigational system will be unable to use that positioning signal to geolocate the current location of the vehicle in which it is installed using that positioning signal. An inability to geolocate the current location of a vehicle can in turn cause difficulties in navigating the vehicle on its journey.

Loss of positioning signal can be especially problematic for autonomous vehicles. Autonomous vehicles are vehicles that are able to carry out various tasks (or missions) without needing a human operator's input. Some autonomous vehicles may be fully autonomous, not requiring any input from a human operator to carry out a mission. Other autonomous vehicles may be semi-autonomous, with some operations or tasks being carried out under the control of a human operator and other operations or tasks being carried out autonomously. As an example, such semi-autonomous functionality may include failsafe functionality which aims to provide a solution to situations in which a human operator loses control of the semi-autonomous vehicle (for example when a communications signal used for command and control purposes between the vehicle and a remote operator is lost). As an example, some semi-autonomous drones may provide a so-called "Auto Return to Home" (RTH) function in which the drone will attempt to autonomously navigate back to a known "Home" location (such as the point from which it started its mission) in the event that it loses the communications signal with its remote operator. The use of autonomous vehicles, and especially unmanned aerial vehicles (UAVs) (which may also be referred to as drones), is growing rapidly and the range of fields within which such vehicles are being applied (and types of mission with which they are being tasked) is ever increasing. As an example, autonomous vehicles may be used to transport a package from one location to another location. As another example, an autonomous vehicle may be used to carry out a survey along a particular route or of a particular geographic area or feature (such as a building). Loss of the positioning signal during such missions may prevent the autonomous vehicle from being able to complete the mission (or at least from being able to safely complete the mission). Indeed, loss of the positioning signal may prevent the autonomous vehicle from safely carrying out any further manoeuvrers autonomously. This is particularly true for UAVs. Indeed, for UAVs, in the absence of manual control by a human operator (for example when a communications signal used for command and control purposes between the vehicle and a remote operator is also lost) loss of the positioning signal can potentially lead to the loss of the UAV itself.

There are a variety of factors that can cause the loss of the positioning signal. Some factors may be relatively static, such as buildings or other geographical features (such as trees, hills or mountains) and constant sources of interference (such as magnetic fields from high voltage wires). Other factors may be more dynamic in nature such as the weather and more temporary sources of interference, whether inadvertent or deliberate (e.g. jamming).

### Summary of the invention

In a first aspect of the invention, there is provided a computer-implemented method of navigating a vehicle on a journey from a start location to an end location, the method comprising: receiving a plurality of measurements of a property of a positioning signal within a geographical region to be traversed by the vehicle during the journey; generating one or more predictions of the property of the positioning signal within the geographical region based on at least some of the plurality of measurements, each prediction indicating a predicted value of the property of the positioning signal at a respective location within the geographical region at a time that the journey is to take place; determining, based on the one or more predictions, at least one location within the geographical region at which the positioning signal is predicted to be lost during the journey; and preventing a loss of the positioning signal by causing the vehicle to avoid the at least one location.

The method may further comprise: generating a predictive model of the property of the positioning signal within the geographic region based on at least some of the plurality of measurements. The predictions may be generated using the predictive model.

Generating the predictive model may comprise training a machine learning model using training data comprising a first subset of the plurality of measurements, an age of each measurement in the first subset being greater than or equal to a predetermined threshold. Predicting respective values of the property of the positioning signal at one or more locations within the geographical region may comprise providing a second subset of the plurality of measurements as an input to the machine learning model, an age of each measurement in the second subset being less than the predetermined threshold.

The plurality of measurements may comprise at least one measurement of the positioning signal taken by the vehicle during one or more previous missions.

The plurality of measurements may comprise at least one measurement of the positioning signal taken by another vehicle.

The method may be performed in advance of the vehicle undertaking the journey, the method preventing the loss of the positioning signal by planning a route between the start location and the end location that does not use the at least one location at which the positioning signal is predicted to be lost.

The method may be performed while the vehicle is undertaking the journey, the at least one location at which the positioning signal will be lost being an upcoming location on a current route being taken by the vehicle for the journey, the method preventing the loss of the positioning signal by: determining a modified route for the vehicle to follow that does not use the at least one location at which the positioning signal is predicted to be lost; and causing the vehicle to follow the modified route in advance of reaching the at least one location at which the positioning signal is predicted to be lost.

The plurality of measurements may comprise a plurality of measurements of the property of the positioning signal taken by the vehicle at respective points on an initial portion of the current route prior to a current location of the vehicle.

The method may further comprise: causing the vehicle to continue to follow the current route up until a point of divergence between the modified route and the current route; receiving one or more further measurements of the property of the positioning signal as the vehicle travels towards the point of divergence; determining that the positioning signal will not be lost at the at least one location based on the further measurements; and disregarding the modified route such that the vehicle will no longer follow the modified route upon reaching the point of divergence.

The method may further comprise: generating one or more further predictions of the property of the positioning signal at one or more locations along a remaining portion of the current route subsequent to a current location of the vehicle; determining, based on the one or more predictions, at least one other location on the route at which the positioning signal is predicted to be lost during the journey along the remaining portion of the current route; determining another modified route for the vehicle to follow that does not use that at least one other location at which the positioning signal is predicted to be lost; and causing the vehicle to follow the modified route in advance of reaching the at least one other location at which the positioning signal is predicted to be lost.

The property of the positioning signal may be either a signal strength of the positioning signal or a signal-to-noise ratio of the positioning signal.

The predictions of the property of the positioning signal may be further based upon one or more, or all, of: a topography of the geographical region; and a set of weather conditions that are expected to be experienced by the vehicle within the geographical region during its journey.

The vehicle may be an autonomous vehicle. Preferably the vehicle may be an unmanned autonomous vehicle, such as an unmanned aerial vehicle.

In a second aspect of the invention, there is provided a computer system comprising a processor and a memory storing computer program code for performing a method according to the first aspect.

In a third aspect of the invention, there is provided a computer program comprising instructions which, when executed by a computer, cause the computer to carry out a method according to the first aspect.

### Brief Description of the Figures

Embodiments of the present invention will now be described by way of example only, with reference to the accompanying drawings, in which:
Figure 1 is a block diagram of a computer system suitable for the operation of embodiments of the present invention;
Figure 2 is a flowchart representation of a computer-implemented method of navigating a vehicle on a journey according to embodiments of the invention;
Figure 3 is a diagrammatic representation of an exemplary geographical region in respect of which embodiments of the invention may operate;
Figure 4 is a flowchart representation of a computer-implemented method that is an adaptation of the method discussed in relation to figure 2; and
Figure 5 is a diagrammatic representation of a drone undertaking an exemplary journey following an initial (or current) route through the exemplary geographical region represented in figure 3.

### Detailed Description of Embodiments

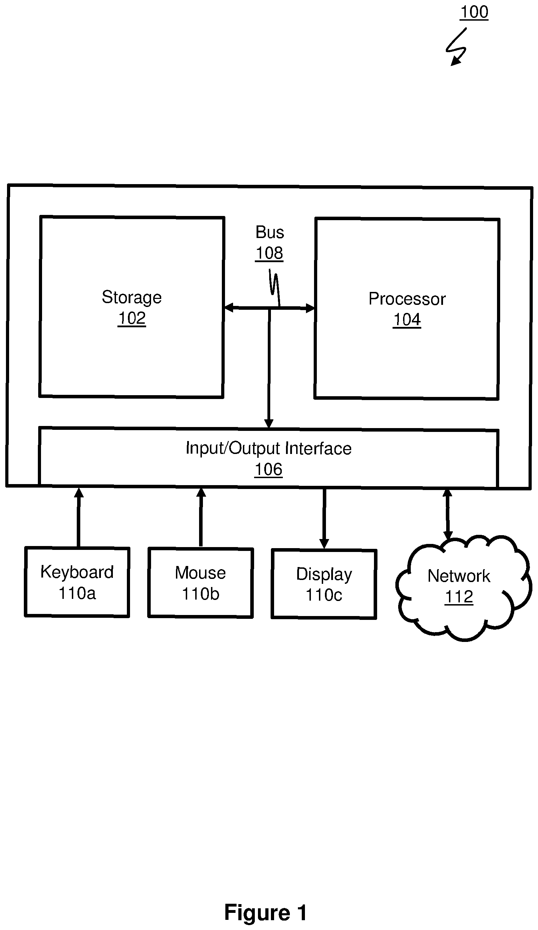

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 11 0c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 110 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); an augmented/virtual reality headset; a server; an embedded computing device; an edge compute node; a cloud compute node or indeed any other computing device with sufficient computing resources to carry out a method according to embodiments of this invention.

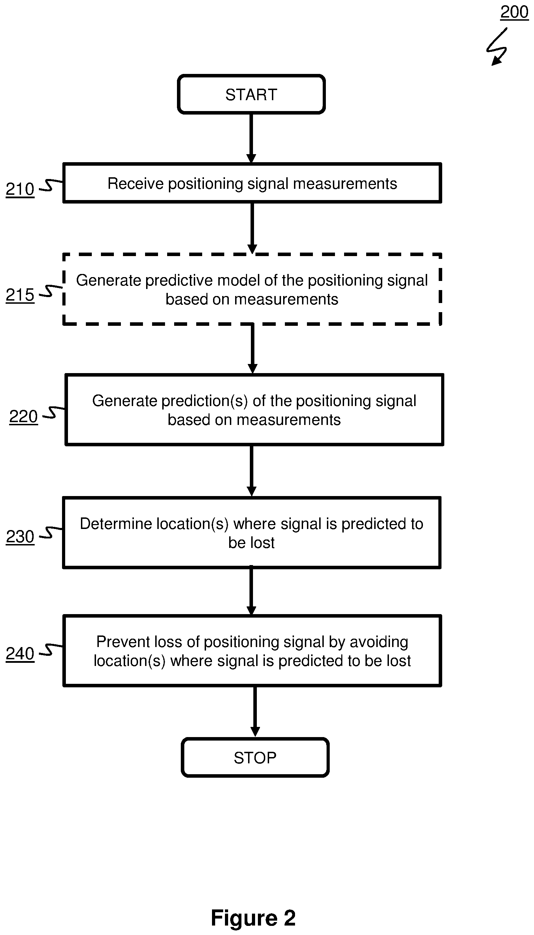

Figure 2 is a flowchart representation of a computer-implemented method 200 of navigating a vehicle on a journey from a start location to an end location according to embodiments of the invention. In the following discussion of the invention, the vehicle will be considered to be unmanned aerial vehicle (UAV) (or drone). However, it will be appreciated that the invention may equally be applied, in other cases, to other types of vehicles whether manned or unmanned. Indeed, whilst the benefits of the invention may be most readily apparent in the context of a UAV, it will be understood that the invention may provide similar benefits to other types of autonomous vehicles, such as unmanned ground vehicles (UGVs), or indeed to manually controlled vehicles. The method 200 starts at an operation 210.

At operation 210, the method 200 receives a plurality (or set) of measurements of a property of a positioning signal within a geographical region to be traversed by the drone while carrying out a mission.

In the following discussion of the invention the positioning signal will be considered to be a positioning signal from satellites that are part of a Global Navigation Satellite System (GNSS). However, it will be appreciated that in other cases, the positioning signal may be a positioning signal received from any other suitable type of positioning signal such as a ground-based radio navigation system.

Similarly, the property of the positioning signal that is measured will be considered to be the signal strength of the positioning signal. However, it will be appreciated that any other property of the positioning signal that provides an indication of the availability (or useability) of the positioning signal may be used instead. For example, in other cases, the property may be a signal-to-noise ratio of the positioning signal.

The plurality of measurements are taken by one or more vehicles as they travel through that same geographical region. Each measurement comprises a respective value of the property of the positioning signal (e.g. a value representing the signal strength of the positioning signal) together with an indication of the location (or point) at which the measurement was taken. In some cases, the location may be a 3-dimensional location (e.g. a latitude, longitude and elevation). However, in other cases, the geographical point may be indicated 2-dimensionally (e.g. by a latitude and longitude).

In most cases, the measurements will also include an indication of a respective time (e.g. a timestamp) at which the measurement was taken. However, such indications of the time at which each measurement are not strictly necessary. For example, in some cases, the plurality of measurements may only contain measurements that were captured within a certain window of time of relatively narrow duration, such as where the plurality of measurements only contains measurements having a respective age that is less than a predetermined threshold. Accordingly, each of the plurality of measurements may be considered as simply being "recent" measurements without requiring an explicit time to be associated with each measurement.

The plurality of measurements may be taken by one or more different vehicles. In some cases, the vehicle in respect of which the method 200 is operating may provide one or more, or all, of the measurements. These measurements may be taken by the vehicle during one or more previous missions that involved passing through the geographical area, or during an initial portion of a mission that is currently being undertaken that involves passing through the geographical area, or both. Additionally or alternatively, one or more, or all, of the plurality of measurements may be taken by one or more vehicles that are different from the vehicle in respect of which the method 200 is operating. These measurements may be taken by the other vehicle(s) during one or more other journeys through the geographical area, or during a current journey through the geographical area that is currently being undertaken by those vehicles. In some cases, those other vehicles may be the same type of vehicles (e.g. UAVs) as the vehicle that the method 200 is operating in respect of. However, in other cases, the other vehicles may include other types of vehicles (e.g. a UGV) that are different from the type of vehicle (e.g. UAV) that the method 200 is operating in respect of.

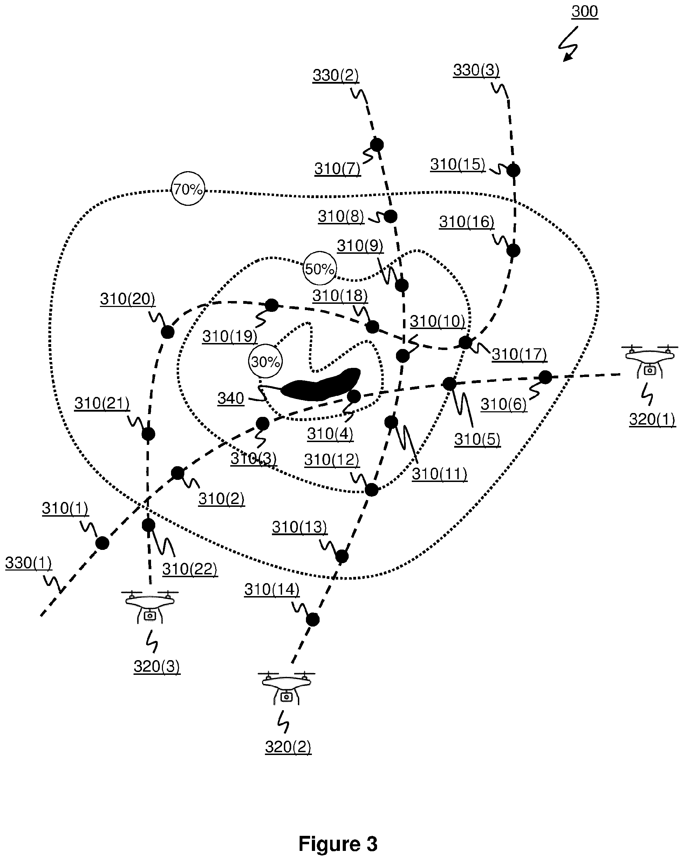

Figure 3 is a diagrammatic representation of an exemplary geographical region 300 (or area) in respect of which embodiments of the invention may operate. In this example, a total of 22 measurements 310 of the property of the positioning signal have been taken at different respective locations within the geographical region 300. Of course, in other examples a different number of measurements, either fewer or greater, may be used. These measurements 310 were taken by three drones 320 whilst undertaking respective missions that involved travelling along respective routes 330 that passed through the geographical region 300. That is to say, a first drone 320(1) collected a first set of measurements 310(1)-310(6) while following a first route 330(1) through the geographical region 300, a second drone 320(2) collected a second set of measurements 310(7)-310(14) while following a second route 330(2) through the geographical region 300 and a third drone 330(3) collected a third set of measurements 310(15)-310(22) while following a third route 330(3) through the geographical region 300. Again, in other examples, measurements may be taken along a different (either fewer or greater) number of routes 330 by a different (either fewer or greater) number of drones 320.

Although the example illustrated by figure 3 shows each measurement 310 being associated with a distinct location within the geographical region 300, it will be appreciated that in other cases, the plurality of measurements may include multiple measurements 310 that relate to the same geographical point. That is to say, different measurements may be taken of the same geographical point at multiple different times. For example, different drones 320 may pass the same geographical point at different times and take respective measurements 310 of the property of the positioning signal at that point at those times. Additionally, or alternatively, a single drone 320 may pass the same geographical point multiple times while travelling along a route 330 to complete a particular mission. Accordingly, the measurements 310 relating to that geographical point may include multiple measurements taken by a single drone 320 during the same mission.

It will also be appreciated that each of the measurements 310 will generally be taken at a different time. This is because the measurements 310 that are captured by a drone 320 as it undertakes a mission are taken sequentially as the drone passes each point at which a measurement is to be taken. Therefore, each measurement 310 captured by a particular drone 320 on a particular mission will be captured at a different time. For example, those measurements at geographic points that are passed earlier on the route 330 will be captured earlier than measurements at geographic points that are passed later on the route 330. Of course, it is nonetheless possible that some measurements 310 are taken at substantially the same time as each other, for example, when two different drones 320 are traversing the geographic region 300 contemporaneously and take a measurement at different geographic points within the geographic region 300 at substantially the same time. However, there is no requirement for the drones 320 from which measurements 310 are received to be traversing the geographic region 300 at the same time as each other. Accordingly, in such cases (or indeed where the measurements are collected by a single drone during multiple different missions), each of the measurements 310 will be associated with a different respective time.

In general, it is expected that the more measurements 310 that can be obtained, the more effective the method 200 may be. It is therefore expected to be beneficial to collect measurements 310 from many different drones 320 (or indeed other types of vehicles) since this will result in a larger collection of measurements 310 being obtained. However, this isn't essential and in some cases the method 200 may operate on a more limited number of measurements 310. Indeed, as already mentioned, in some cases, the method 200 may operate solely based on measurements 310 that have been obtained by the individual drone in respect of which the method 200 is being performed earlier in that same mission.

It is also generally expected that the measurements 310 of the positioning signal can be taken opportunistically. That is to say, that the measurements are 310 can be taken by drones (or other autonomous vehicles) that happen to pass through the geographical area while undertaking missions that are unrelated to measuring the availability of the positioning signal within the geographical area. However, it is also possible, in some cases, for the measurements to include measurements obtained from one or more autonomous vehicles that are deployed on a dedicated mission to survey the availability of the positioning signal within the geographical area.

In any case, having obtained a set of measurements 310 of a property of the positioning signal at a plurality of respective locations within the geographical region 300 at operation 210, the method 200 proceeds to an optional operation 215. However, where optional operation 215 is omitted from the method 200, the method 200 instead proceeds to an operation 220.

At optional operation 215, the method 200 generates a predictive model of the property of the positioning signal within the geographic region based on at least some of the plurality of measurements that were received at operation 210. The predictive model effectively provides a map of the property (e.g. signal strength) of the positioning signal within the geographical region 300. The predictive model or map that is generated from the measurements 310 can be used to predict the property of the positioning signal (e.g. its signal strength) at any point within the geographical region 300 (to a certain degree of resolution). This is represented in figure 3 by the signal strength contours at 70%, 50% and 30% signal strength (although it is noted that these are shown merely for illustrative purposes and that it is not necessary to actually determine such contours when using the predictive model).

In some cases, the measurements may be used to calibrate a model of the property of the positioning signal within the geographical area. For example, a generic predictive model of the positioning signal may be learnt using machine learning techniques to train a machine learning model, such as a neural network, based on training data comprising numerous sets of signal data representing the property (e.g. signal strength) of the positioning signal from various different geographical regions (not necessarily from geographical region 300). Such a generic machine learning model may therefore be trained to generate a set of outputs representing a predicted value of the property (e.g. signal strength) of the positioning signal at a plurality of points distributed evenly across a geographical region (i.e. at a particular resolution throughout the geographical region) based on an input of known measurements of the property of the positioning signal at different locations within that geographical region. Accordingly, the received measurements may be provided as an input to such a model to calibrate it to the current conditions, allowing predictions to be obtained about the property of the positioning signal at different locations within the geographic region 300 from the output of the machine learning model. Although such a generic model will not reflect the idiosyncrasies, of the particular geographic region 300 in respect of which the method 200 is operating, it does nonetheless embody knowledge of the typical spatial relationship between different values of the property of the positioning signal (i.e. how the positioning signal tends to degrade) and so can nonetheless provide useful predictions.

However, in other cases, a subset of the measurements 310 received at operation 210 may be used to train a machine learning model, such as a neural network. By incorporating such measurements in the training data used to train the machine learning model, the machine learning model can also embody knowledge of the specific way in which the property of the positioning signal tends to vary within the geographical region. In particular, that embodied knowledge may encompass, for example, the effects of the specific topography of the geographical region 300 on the property of the positioning signal across the geographical region 300. As a result, the predictions subsequently produced by the trained machine learning model may be based on the topography of the geographical region. In such cases, the measurements 310 received at operation 210 may be split into two disjoint subsets, a first subset to be used for training the machine learning model, and a second subset to be used as an input to the trained machine learning model to "calibrate" it to the current conditions. Accordingly, the first subset may comprise older measurements (e.g. any of the plurality of measurements 310 having an age that is greater than or equal to a predetermined threshold) and the second subset may comprise newer measurements (e.g. any of the plurality of measurements 310 having an age that is less than the predetermined threshold).

In some cases, where enough measurements are available, it may be possible to train the machine learning model exclusively from the measurements collected for the geographical region 300 in respect of which the method 200 is operating. However, in other cases, a generically trained machine learning model, such as described in the preceding paragraph, may be used as a starting point and subsequently refined by carrying out additional iterations of learning using the measurements collected from the geographical region 300 in respect of which the method 200 is operating.

Additionally, or alternatively, the weather conditions for the geographical region 300 may also be accounted for by the predictive model such that the predictions produced by the predictive model are further based upon the current weather conditions (or the predicted weather conditions expected to be experienced by the autonomous vehicle when undertaking the mission in the future). For example, the training data that is used to train a neural network may further comprise an indication of the weather conditions being experienced within the geographic region 300 at the time each of the measurements in the training data was taken. In order to produce predictions, the current (or predicted) weather conditions at one or more points in the geographic region 300 may be provided as an input to the predictive model alongside the plurality of (recent) measurements.

Of course, it will be appreciated that any other appropriate factors, may also be incorporated into the predictive model to allow the predictions produced by the predictive model to account for such other factors in predicting values of the property of the positioning signal within the geographic region.

In some cases, the predictive model that is generated is a 3-dimensional predictive model. That is to say, each prediction is for a specific latitude, longitude and elevation. This may be particularly relevant when the method 200 is performed in respect of drones, which can fly at different altitudes, as it can reflect the changes in the property of the positioning signal at a given latitude and longitude as a result of changes in elevation. This can be achieved, for example, by training a neural network using training data in which each measurement is associated with a latitude, longitude and elevation

In other cases, a 2-dimensional predictive model may be generated. That is to say, the prediction is for a specific latitude and longitude and does not take into account the elevation. This may be particularly relevant when the method 200 is performed in respect of ground-based autonomous vehicles which can only operate at a single elevation (i.e. ground-level) for which changes in the property of the positioning signal resulting from changes in elevation are largely irrelevant.

In some cases, a time-dimension may be included in the predictive model. For example, a 3-dimensional predictive model may be expanded to be a 4-dimensional predictive model through the inclusion of time as an additional dimension (e.g. in addition to longitude, latitude and elevation). Similarly, a 2-dimensional may be expanded to be a 3-dimensional predictive model through the inclusion of time as an additional dimension (e.g. in addition to longitude and latitude). Where the predictive model incorporates a time-dimension, then predictions can be obtained for a specific geographic point (in either 2 or 3 dimensions) at a particular time. Accordingly, the predictive model may reflect time-varying changes in the property of the parameter at each location. This can be achieved, for example, by training a neural network using training data in which each measurement is associated with a time (in addition to a longitude, latitude and/or elevation). A time for which the predictions are to be produced may then also be provided as an input to the predictive model in order to obtain predictions for that time.

Having generated a predictive model of the positioning signal within the geographical region 300 at operation 215, the method 200 proceeds to an operation 220.

At operation 220, the method 200 generates one or more predictions of the property of the positioning signal within the geographical region based on at least some of the plurality of measurements that were received at operation 210. The predictions each indicate a respective predicted value of the property (e.g. signal strength) of the positioning signal at a respective location within the geographical region at a time that the journey is to take place.

Where a predictive model of the property of the positioning signal was generated at operation 215, this predictive model may be used to generate the predictions of the property of the positioning signal by providing at least some of the plurality of measurements as an input to the predictive model.

However, where no such predictive model is generated (i.e. where optional operation 215 is not performed by the method 200), the predictions may instead be produced by interpolation (and/or extrapolation) from the received measurements to produce one or more predictions of the value of the property of the positioning signal at one or more other locations within the geographic area 300. As will be appreciated by those skilled in the art, any suitable interpolation (and/or extrapolation) techniques may be used.

Having produced predictions of the property of the positioning signal at operation 220, the method 200 proceed to an operation 230.

At operation 230, the method 200 determines, based on the one or more predictions produced at operation 220, at least one location within the geographical region 300 at which the positioning signal is predicted to be lost during the journey. That is to say, the method 200 determines for each of the predictions produced at operation 220, whether the predicted value of the property of the positioning signal would result in the positioning signal being available (or usable) at that location or not. This is achieved by comparing the predicted values of the property of the positioning signal to a predetermined threshold. Where the predicted value of the property (e.g. signal strength) is greater than the predetermined threshold, it is determined that the positioning signal is available (or usable) at the location associated with that prediction. Conversely where the predicted value is less than or equal to the predetermined threshold, it is determined that the positioning signal is unavailable (or unusable) at the location associated with that prediction. Referring back to the example shown in figure 3, any predictions associated with locations within the area 340 will provide a predicted value of the property of the positioning signal that is less than or equal to the predetermined threshold. As a result, the locations associated with those predictions (i.e. any locations within the area 340) are considered to be locations at which the positioning signal is predicted to be lost during the journey. Of course, it will be appreciated that in some cases, where the nature of property of the positioning signal is such that a lower value is more desirable (i.e. where a higher value indicates degradation of the positioning signal), these comparisons to the predetermined threshold may be reversed. That is to say, in such cases, where the predicted value of the property is less than the predetermined threshold, it may be determined that the positioning signal is available (or usable) and not conversely the positioning signal may be determined to be unavailable (or unusable) if the predicted value is greater than or equal to the predetermined threshold.

Having identified any locations within the geographical region 300 at which the positioning signal is predicted to be lost the method 200 proceeds an operation 240.

At operation 240, the method 200 prevents a loss of the positioning signal for the vehicle during its journey by causing the vehicle to avoid those locations at which the positioning signal is predicted to be lost.

In some cases, the method 200 may be performed in advance of the vehicle undertaking the journey, that is to say before a route for the vehicle to take during the journey has been planned. Accordingly, the predicted locations at which the positioning signal will be lost within the geographical region 300 can be taken into account during the initial route planning for the journey so as to determine a route between the desired start and end locations for the journey that avoids (or does not use) those locations. Any appropriate technique for planning a route which avoids the locations at which the positioning signal will be lost may be used. For example, in some cases, routes may be repeatedly requested from an existing route planning system until a route is obtained that does not use the predicted locations at which the positioning signal will be lost. However, in other cases, the predictions (or the predictive model where one is available) may be incorporated into the route planning system itself. For example, a number of predictions about the positioning signal may be made for a plurality of locations throughout the geographic region 300 (e.g. predictions may be made at regular intervals evenly distributed throughout the region in either 2 or 3 dimensions, as appropriate). The route planning system may then incorporate those predictions into its route planning algorithm in order to avoid areas of the geographic region 300 for which the positioning signal is predicted to be lost (i.e. unusable). The route planning system may also use the predictions (or the predictive model) to optimise the route through the geographic region 300 with respect to the property of the positioning signal. That is to say, the method 200 may use the predictions (or the predictive model) to find a route through the geographic region 300 for which that property of the positioning signal is maintained at the optimal level. As will be appreciated by those skilled in the art, this optimisation may be a multi-objective optimization with the property of the positioning signal being one of the objectives to be balanced with one or more other objectives such as an overall distance of the route or the strength of another type of signal (such as a communication signal used for command and control of the drone). In some cases, a measure of confidence may be provided in respect of each of the predictions. In such cases, the respective measures of confidence for each prediction may also be used by the route planning system when determining. For example, the route planning system may avoid planning routes that visit points for which the associated prediction has a low measure of confidence (e.g. a measure of confidence that is less than a predetermined threshold). Alternatively, the measure of confidence may also be incorporated into the multi-objective optimization (e.g. to identify a route having an optimal balance between the predicted values of the property of the positioning signal and a confidence in those predictions). The route that is may then be subsequently used by the drone when it undertakes its mission.

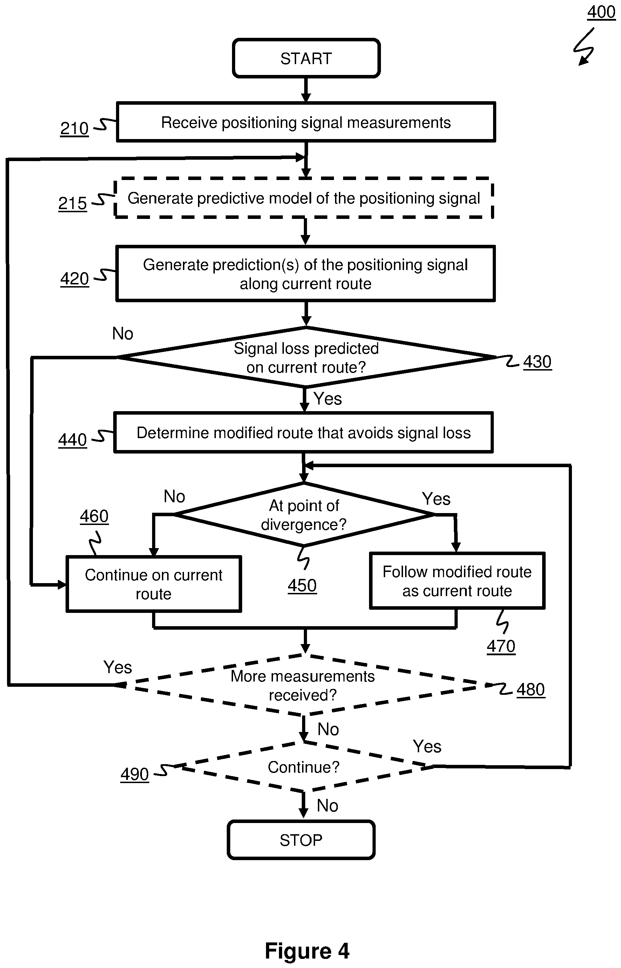

In other cases, the method 200 may be performed whilst the vehicle is undertaking the journey, that is to say after a route for the vehicle to take during the journey has been planned. This approach will now be discussed with reference to figure 4.

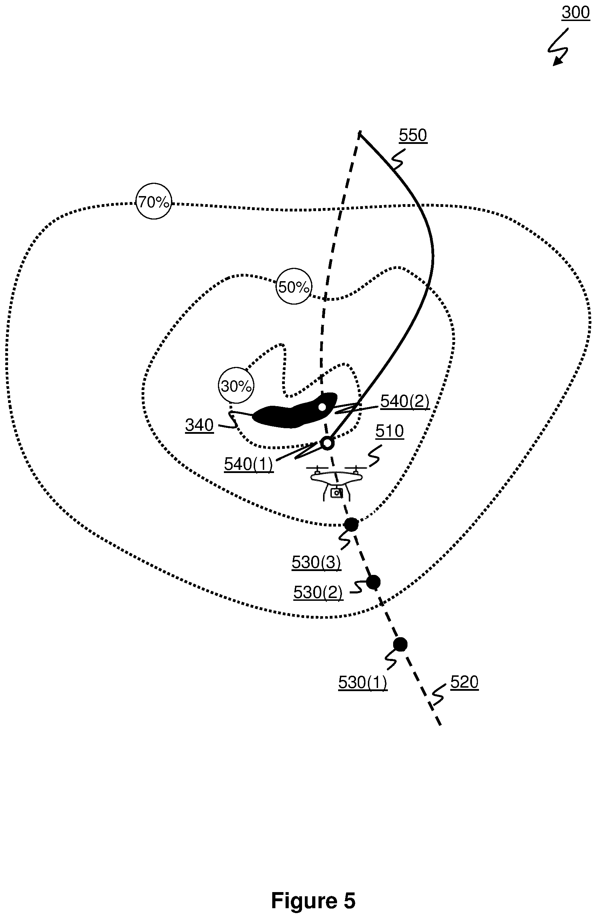

Figure 4 is a flowchart representation of a computer-implemented method 400 that is an adaptation of the method 200 discussed in relation to figure 2. Specifically, the method 400 is a method of preventing loss of the positioning signal for a vehicle while it is undertaking a journey according to embodiments of the invention. The method 400 will be discussed in conjunction with figure 5, which is a diagrammatic representation of a drone 510 undertaking an exemplary journey following an initial (or current) route 520 through the exemplary geographical region 300 represented in figure 3. The method 400 begins at operation 210.

As already discussed for the method 200 represented by figure 2, at operation 210, the method 400 receives a plurality of measurements of a property (e.g. signal strength) of the positioning signal. When performing the method 400, these measurements may, in some cases, also include (or even consist entirely of) measurements of the property of the positioning signal that have been taken by the vehicle during the initial portion of the journey. That is to say, the measurements may have been taken by the vehicle while travelling between the start point and its current location in the journey at which the method 400 (or the current iteration of method 400) is being performed.

For example, with reference to figure 5, the drone 510 has collected three measurements 530(1), 530(2) and 530(3) along an initial portion of its current route 520 between a starting point for the journey and the drone's current location.

Having received the plurality of measurements at operation 210, the method 400 proceeds to an optional operation 215 (which is the same as described above in relation to figure 2) and then to an operation 420 or, if optional operation 215 is not performed by the method 400, the method proceeds directly to operation 420.

At operation 420, the method 400 generates one or more predictions of the property of the positioning signal along the current route. This is done in a similar manner to that discussed above for operation 220 of the method 200 represented by figure 2. However, the predictions are made along the current route that is being followed by the vehicle. That is to say, the locations associated with each prediction are locations along the current route. For example, the method 400 may identify a plurality of points along the route and produce predictions for each of these points. These points may be selected to be at regular intervals (e.g. a predetermined distance from each other) along the remainder of the drone's 510 current route 520. That is to say, the predictions are produced for points at locations along the remaining portion of the current route 520 between the drone's 510 current location and an end point for the journey. In some cases, the method 400 may evaluate points along the entire remaining portion of the current route 520 to identify all points along the route 520 where the positioning signal is predicted to be lost. However, in other cases, the method 400 may evaluate points along a predetermined distance of the remaining portion of the current route (i.e. between the drone's current location and a point further along the route 520 that is the predetermined distance away from the current location). In yet other cases, the method 400 may perform a "search" for the nearest point to the drone 510 further along the route 520 at which the positioning signal is predicted to be lost. This may be achieved by iterating between operation 420 and 430 which is discussed below, progressively producing predictions for and then evaluating each point in turn along the current route 520 until a prediction that is produced for a point along the route 520 indicates that the positioning signal will be lost. Once a point has been found at which the positioning signal is predicted to be lost, the method 400 may stop the search such that no predictions are produced for any locations further along the route 520.

Returning to the example illustrated in figure 5, the method 400 generates two predictions 540, a first prediction 540(1) and a second prediction 540(2), using the "search" approach discussed above.

Having generated one or more predictions of the property of the positioning signal along the current route 520, the method proceeds to an operation 430.

At operation 430, the method 400 determines whether a loss of the positioning signal has been predicted at any point(s) along the drone's 510 current route 520. This is performed in a similar manner to that discussed for operation 230 of the method 200 represented in figure 2. Specifically, the method 400 determines, for each of the predictions produced at operation 420, whether the predicted value of the property would result in the positioning signal being available (or usable) at that location or not. This is achieved by comparing the predicted values of the property of the positioning signal to a predetermined threshold. Where the predicted value of the property (e.g. signal strength) is greater than the predetermined threshold, it is determined that the positioning signal is available (or usable) at the location associated with that prediction. Conversely, where the predicted value is less than or equal to the predetermined threshold, it is determined that the positioning signal is unavailable (or unusable) at the location associated with that prediction.

Referring back the example shown in figure 5, the first prediction 540(1) may indicate that the signal strength (in this example) of the positioning signal at the location associated with the first prediction 540(1) is approximately 30%, which may be greater than a predetermined threshold at which the positioning signal may be considered to be unusable (and therefore lost). Accordingly, the first prediction 540(1) is considered to indicate that the positioning signal is available at that point. However, the second prediction 540(2) may indicate that the signal strength of the positioning signal at the location associated with the second prediction 540(2) is below the predetermined threshold. Accordingly, the second prediction 540(2) is considered to indicate that the positioning signal is lost (i.e. not available) at that point.

Having predicted that the positioning signal will be lost at a point along the drone's 510 current route 520, the method 400 proceeds to an operation 440. However, if no such prediction is made, that is to say, none of the predictions 540 made during operation 420 indicate that the positioning signal will be lost, the method 400 proceeds instead to an operation 460.

At operation 440, the method 400 determines a modified route 550 for the vehicle to follow that avoids the predicted point at which the positioning signal will be lost. The modified route starts at a point on the current route 520 that is prior to (or in advance of) the point at which the positioning signal is predicted to be lost. In some cases, the modified route 550 may diverge from the current route 520 straight away (i.e. from the drone's 510 current location). However, in other cases, the modified route 550 may diverge from the current route 520 further along the current route (but in advance of the point at which the positioning signal is predicted to be lost). That is to say, the point of divergence of the modified route 550 from the initial route 520 (or the start of the modified part of the route) need not be the current location of the drone 510 at the time that the predictions are made and the modified route determined. Instead, the point of divergence may be at any point between the current location of the drone 510 and the point on the route at which the positioning signal is predicted to be lost.

In some cases, the point of divergence may be determined based on a further prediction. Specifically, the method 400 may predict (e.g. using the predictive model) when the property of the positioning signal will be less than or equal to a second predetermined threshold (the second threshold being higher than the threshold at which the positioning signal is considered to be lost). The point of divergence may then be specified as being at that point where the property of the positioning signal falls below or equals the second predetermined threshold. Accordingly, the drone may continue some way along its current route 520 before starting on the modified route 550.

By setting the point of divergence for the modified route 550 further away from the drone's current position, the method 500 can allow time for additional measurements of the property of the positioning signal to be received which may be used to update the predictive model and further modify the route as appropriate (by performing additional iterations of the method 400, as will be discussed below in relation to subsequent operations of the method 400). To allow additional time for such measurements to be collected (and thereby refine and/or improve the confidence in the predictions of the positioning signal), the method 400 may also limit the speed at which the drone travels along the remaining portion of the current route 520 between the drone's 510 current location and the point of divergence between the current route 520 and the modified route 550.

In some cases, the determination of the point of divergence may be further based on a measure of confidence in the predictions of the property of the positioning signal. As will be appreciated by those skilled in the art, the predictive model may be trained to produce a measure of confidence in each prediction. This measure of confidence may be used, for example, to determine the second threshold used to determine the point of divergence. That is to say, the second threshold may be a function of the measure of confidence in each prediction. For example, where there is a relatively low level of confidence in the prediction, the second threshold may be higher than where the is a relatively high level of confidence in the prediction.

Similar techniques to those discussed above in relation to route planning at operation 230 of the method 200 represented in figure 2 may be used to determine the modified route 550. That is to say, the method 400 may either use the predictions to evaluate routes that are produced by an existing route planning system (i.e. by iteratively requesting alternative routes be generated until a route that avoids the point(s) at which the positioning signal is predicted to be lost is found) or can incorporate the predictions into the route planning such that the route planning activity can account for the predictions when determining a route (e.g. by optimising or co-optimising the routes based on the predicted values of the positioning signal). In determining a modified route, the method 400 may generate further predictions of the property of the positioning signal that are not on the current route 520 in order to facilitate the determination of a suitable alternative route.

In some cases, the modified route 550 may involve backtracking along the initial route 550. That is to say, at the point of divergence, the drone 510 will retrace its steps along the current route 520 until it reaches another point at which the modified route 550 leaves the current route 520 completely to visit points that were not on the initial route. In particular, in cases where the drone 510 is itself measuring the property of the positioning signal as it undertakes its mission, a reasonable level of confidence may exist in the measurements along the current route 520 approaching the point of divergence. Accordingly, by backtracking along the current route 520, the drone 510 can reliably reach a point at which the property of the positioning signal is sufficiently high (e.g. above a predetermined threshold) that it is considered to have reasonable margin of safety to permit the drone 510 to continue exploring the area. In some cases, this backtracking behaviour may be provided as a heuristic for the method 400 to follow. In other cases, this backtracking behaviour may result, for example, from the use of a measure of confidence in the predictions of the property of the positioning signal in the route planning process as described above (since, in the absence of other measurements in the geographic area 300, the confidence may be highest in the predictions along the portion of the route that the drone 510 has already travelled along and collected measurements for).

Where the method 400 is being performed in respect of an aerial vehicle, such as the drone 510, which has 3-dimensional freedom of movement, the modified route 550 may, in some cases, be the same as the current route 520 in the latitude-longitude plane (i.e. as viewed from an aerial view), differing only in (or at least substantially only in) the elevation of the drone 510 at different points along the route. In some cases, this change of elevation may be sufficient to avoid the predicted loss of the positioning signal as increasing the altitude will generally improve the strength (and signal-to-noise ratio) of a positioning signal.

In any case, having determined a modified route 550 for the drone 510 to follow at operation 440, the method 400 proceeds to an operation 450.

At operation 450, the method 400 determines whether the drone 510 has reached a point of divergence between the current route and any modified route that has been determined at operation 440. If the drone 510 has not yet reached the point of divergence between the current route and the modified route (or if no modified route has yet been determined, for example, because it has not yet been predicted that the positioning signal will be lost), then the method 400 proceeds to an operation 460. Otherwise, if the drone has reached the point of divergence between the current route 520 and the modified route 550, the method 400 proceeds to an operation 470.

At operation 460, the method 400 causes the drone 510 to continue further along its current route. The method 400 then proceeds to an optional operation 480. However, if optional operation 480 is not to be performed by the method 400, the method 400 proceeds instead to an optional operation 490. In the case that optional operation 490 is also not to be performed by the method 400, the method 400 ends.

At operation 470, the method 400 causes the drone 510 to follow the modified route 550 instead of the current route 520. Accordingly, the modified route 550 may now be considered to be the current route for any further iterations of the method 400. The method 400 then proceeds to an optional operation 480. However, if optional operation 480 is not to be performed by the method 400, the method 400 proceeds instead to an optional operation 490. In the case that optional operation 490 is also not to be performed by the method 400, the method 400 ends.

At optional operation 480, the method 400 determines whether further measurements of the property of the positioning signal have been received while the drone 510 continues along its current route 520 towards the point of divergence. These further measurements may include measurements taken by the drone 510 itself as it continues along its current route. Additionally or alternatively, the further measurements may include measurements taken by other vehicles, such as other drones, from within the geographical area 300 while the drone is continuing along the current route. The further measurements may be used to update and refine the predictions that have been made about the property of the positioning signal (e.g. by using the further measurements to update a machine learning model).

Where further measurements of the property of the positioning signal have been received, the method 400 may return to optional operation 215 or, where optional operation 215 is not performed by the method 400, to operation 420 in order to perform another iteration of the method 400 in which updated predictions may be produced and the route to be taken by the drone 510 may be further modified accordingly. For example, it may be predicted in a subsequent iteration of the method 400 that the positioning signal will not be lost at a point where it was previously predicted to be lost. In such a case, a modified route that was previously determined to avoid that point may be abandoned (or disregarded) and the drone 510 may be permitted to continue along its current route. As another example, it may be predicted in a subsequent iteration of the method 400 that the positioning signal will be lost at additional points on the route at which it was not previously predicted to be lost and the route may be further modified to additionally avoid those additional points.

Where further measurements of the property of the positioning signal have not been received, the method 400 continues to optional operation 490.

At optional operation 490, the method 400 determines whether to continue. That is to say, the method 400 determines whether additional iterations of (at least part of) the method 400 should be performed. As will be appreciated, it is generally anticipated that the method 400 may be performed regularly (or periodically or sporadically) allowing for predictions to be updated as the drone 510 travels on its journey and as more up-to-date information (i.e. additional measurements) becomes available. This may result in numerous route changes being determined as the drone 510 completes its journey. Accordingly, where the method 400 is to continue to operate, the method 400 returns to operation 450 to continue along its current route and receive further measurements. Otherwise, the method 400 ends.

By performing the method iteratively in this fashion (i.e. by performing optional operations 480 and 490), the drone 510 can build up an increasingly accurate picture of the geographical area 300 as it undertakes its mission. This is especially useful where the drone 510 itself collects measurements of the property of the positioning signal as it undertakes its mission. Indeed, in some cases, this technique may enable the drone 510 to successfully navigate a new geographical area 510 for which no data was available in advance. Specifically, the drone 510 can use measurements it takes itself as it undertakes the mission through the new geographical area 510 to predict the availability of the positioning signal on its intended route ahead and make adjustments to its route as necessary to avoid predicted loss of the positioning signal. In such cases, the method 400 may be configured to perform in a more "exploratory" manner. That is to say, where a loss of positioning signal is predicted along the route for a drone, the drone may nonetheless continue along that route towards the predicted point at which the positioning signal is lost whilst monitoring the property (e.g. signal strength) of the positioning signal as it goes. Should the property of the positioning signal drop below a first predetermined threshold (which is above the level at which the positioning signal may be considered to be lost), then the drone may follow a modified route which involves backtracking along the route at which it approached that point until the positioning signal reaches a second predetermined threshold that is higher than the first predetermined threshold from which it is considered safe to continue trying to find a route through the geographical area 300 to complete its mission.

The methods 200 and/or 400 described above may be performed by any suitable computer system.

In some cases, for example, the method 200 and/or 400 may be performed by a computer system onboard the autonomous vehicle with which the method is concerned (i.e the autonomous vehicle for which the method is seeking to prevent loss of positioning signal). For example, the method 200 and/or 400 may be performed by an onboard navigational controller that is responsible for carrying out route planning for the autonomous vehicle.

In other cases, the method 200 and/or 500 may be performed remotely from the autonomous vehicle with which the method is concerned. For example, the method 200 and/or 400 may be performed by a traffic management system for autonomous vehicles. The traffic management system may manage (or control) a plurality of autonomous vehicles. The traffic management system may comprise a navigational controller responsible for carrying out route planning for the autonomous vehicles under its control. That is to say the navigational controller may plan respective routes for the autonomous vehicles to use when undertaking different missions and provide those routes to the autonomous vehicles. As part of this planning, the navigational controller may perform the method 200 and/or 400 to prevent the loss of the positioning signal for those autonomous vehicles during their respective missions. As part of performing the method 200 and/or 400, the navigational controller may (at operation 210) receive the measurements of the positioning signal within the geographical region 300 from one or more of the autonomous vehicles under its control. The traffic management may then (at operation 220) use those measurements to generate (or update) a predictive model of the positioning signal within the area 300, as discussed above. The navigational controller may then use this predictive model as part of the provision of the routes to the autonomous vehicles either as part of the initial route planning and/or by providing subsequent route updates to prevent the loss of the positioning signal for those autonomous vehicles during their respective missions.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above-described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer-implemented method of navigating a vehicle on a journey from a start location to an end location, the method comprising:
receiving a plurality of measurements of a property of a positioning signal within a geographical region to be traversed by the vehicle during the journey;
generating one or more predictions of the property of the positioning signal within the geographical region based on at least some of the plurality of measurements, each prediction indicating a predicted value of the property of the positioning signal at a respective location within the geographical region at a time that the journey is to take place;
determining, based on the one or more predictions, at least one location within the geographical region at which the positioning signal is predicted to be lost during the journey; and
preventing a loss of the positioning signal by causing the vehicle to avoid the at least one location.

2. The method of claim 1 wherein the method further comprises:
generating a predictive model of the property of the positioning signal within the geographic region based on at least some of the plurality of measurements,
wherein the predictions are generated using the predictive model.

3. The method of claim 2 wherein:
generating the predictive model comprises training a machine learning model using training data comprising a first subset of the plurality of measurements, an age of each measurement in the first subset being greater than or equal to a predetermined threshold; and
predicting respective values of the property of the positioning signal at one or more locations within the geographical region comprises providing a second subset of the plurality of measurements as an input to the machine learning model, an age of each measurement in the second subset being less than the predetermined threshold.

4. The method of any one of the preceding claims wherein the plurality of measurements comprise at least one measurement of the positioning signal taken by the vehicle during one or more previous missions.

5. The method of any one of the preceding claims wherein the plurality of measurements comprise at least one measurement of the positioning signal taken by another vehicle.

6. The method of any one of the preceding claims wherein the method is performed in advance of the vehicle undertaking the journey, the method preventing the loss of the positioning signal by planning a route between the start location and the end location that does not use the at least one location at which the positioning signal is predicted to be lost.

7. The method of any one of claims 1 to 5 wherein the method is performed while the vehicle is undertaking the journey, the at least one location at which the positioning signal will be lost being an upcoming location on a current route being taken by the vehicle for the journey, the method preventing the loss of the positioning signal by:
determining a modified route for the vehicle to follow that does not use the at least one location at which the positioning signal is predicted to be lost; and
causing the vehicle to follow the modified route in advance of reaching the at least one location at which the positioning signal is predicted to be lost.

8. The method of claim 7 wherein the plurality of measurements comprise a plurality of measurements of the property of the positioning signal taken by the vehicle at respective points on an initial portion of the current route prior to a current location of the vehicle.

9. The method of claim 7 or claim 8 wherein the method further comprises:
causing the vehicle to continue to follow the current route up until a point of divergence between the modified route and the current route;
receiving one or more further measurements of the property of the positioning signal as the vehicle travels towards the point of divergence;
determining that the positioning signal will not be lost at the at least one location based on the further measurements; and
disregarding the modified route such that the vehicle will no longer follow the modified route upon reaching the point of divergence.

10. The method of claim 9 further comprising:
generating one or more further predictions of the property of the positioning signal at one or more locations along a remaining portion of the current route subsequent to a current location of the vehicle;
determining, based on the one or more predictions, at least one other location on the route at which the positioning signal is predicted to be lost during the journey along the remaining portion of the current route;
determining another modified route for the vehicle to follow that does not use that at least one other location at which the positioning signal is predicted to be lost; and
causing the vehicle to follow the modified route in advance of reaching the at least one other location at which the positioning signal is predicted to be lost.

11. The method of any one of the preceding claims wherein the property of the positioning signal is either a signal strength of the positioning signal or a signal-to-noise ratio of the positioning signal.

12. The method of any one of the preceding claims wherein the predictions of the property of the positioning signal are further based upon one or more, or all, of:
a topography of the geographical region; and
a set of weather conditions that are expected to be experienced by the vehicle within the geographical region during its journey.

13. Any one of the preceding claims wherein the vehicle is an autonomous vehicle, preferably wherein the vehicle is an unmanned autonomous vehicle, such as an unmanned aerial vehicle.

14. A computer system comprising a processor and a memory storing computer program code for performing the steps of any one of claims 1 to 10.

15. A computer program comprising instructions which, when executed by a computer, cause the computer to carry out the method of any one of claims 1 to 10.
